# EUROPEAN PATENT APPLICATION

(11) **EP 4 350 610 A1**
(43) Date of publication of application: **10.04.2024**
(21) Application number: 22811267.8
(22) Date of filing: 20.05.2022
(51) Int. Cl.: G06T 7/00, G06T 7/11, G06N 20/00, G06V 10/774

(54) **TEACHING DATA GENERATION DEVICE, TEACHING DATA GENERATION METHOD, AND IMAGE PROCESSING DEVICE**

(30) Priority: 24.05.2021 JP 2021087206
(71) Applicant: Kyocera Corporation, Kyoto-shi, Kyoto 612-8501 (JP)
(72) Inventor: FURUKAWA, Kohei, Kyoto-shi, Kyoto 612-8501 (JP)
(74) Representative: TBK
(86) International application number: PCT/JP2022/021023
(87) International publication number: WO 2022/249997

(57) **Abstract**

A teaching data generation device includes an input unit, a control unit, and an output unit. The input unit acquires at least one input image including an image of a recognition target. The control unit performs a first process to generate polygon data along an outline of a portion determined to be the image of the recognition target in a first region of the input image. The control unit performs a second process to set segments resulting from region segmentation of the input image based on a luminance gradient. The control unit performs generation of modified polygon data resulting from modification of the polygon data based the segments set in the second process. The control unit performs addition of label information to the input image to generate teaching data. The output unit outputs the teaching data.

## Description

### CROSS-REFERENCE TO RELATED APPLICATIONS

The present application claims priority from Japanese Patent Application No. 2021-87206 filed on May 24, 2021, the entire contents of which are hereby incorporated by reference.

### TECHNICAL FIELD

The present disclosure relates to a teaching data generation device, a teaching data generation method, and an image processing device.

### BACKGROUND OF INVENTION

Known devices generate teaching data including a label added to an image based on the result of segmentation of the image using a machine learning model (for example, refer to Patent Literature 1).

### CITATION LIST

### PATENT LITERATURE

Patent Literature 1: Japanese Unexamined Patent Application Publication No. 2019-101535

### SUMMARY

In an embodiment of the present disclosure, a teaching data generation device includes an input unit, a control unit, and an output unit. The input unit acquires at least one input image including an image of a recognition target. The control unit performs a first process to generate polygon data along an outline of a portion determined to be the image of the recognition target in a first region of the input image. The control unit performs a second process to set segments resulting from region segmentation of the input image based on a luminance gradient. The control unit generates modified polygon data resulting from modification of the polygon data based the segments set in the second process. The control unit adds label information to the input image to generate teaching data. The output unit outputs the teaching data.

In an embodiment of the present disclosure, a teaching data generation method includes acquiring at least one input image including an image of a recognition target. The teaching data generation method includes performing a first process to generate polygon data along an outline of a portion determined to be the image of the recognition target in a first region of the input image. The teaching data generation method includes performing a second process to set segments resulting from region segmentation of the input image based on a luminance gradient. The teaching data generation method includes generating modified polygon data resulting from modification of the polygon data based the segments set in the second process. The teaching data generation method includes adding label information to the input image. The teaching data generation method includes generating teaching data to output the generated teaching data.

In an embodiment of the present disclosure, an image processing device includes an input unit and a control unit. The input unit acquires at least one input image including an image of a recognition target. The control unit performs a first process to generate polygon data along an outline of a portion determined to be the image of the recognition target in a first region of the input image. The control unit performs a second process to set segments resulting from region segmentation of the input image based on a luminance gradient. The control unit generates modified polygon data resulting from modification of the polygon data based the segments set in the second process.

### BRIEF DESCRIPTION OF THE DRAWINGS

FIG. 1 is a block diagram illustrating an example of the configuration of a teaching data generation device according to an embodiment.
FIG. 2 illustrates an example of an input image including a recognition target.
FIG. 3 illustrates an example of a preprocessing image resulting from preprocessing to the input image.
FIG. 4 illustrates an example of an initial polygon image including an initial polygon of the recognition target.
FIG. 5 illustrates an example of a selection screen to select a generation mode of the initial polygon.
FIG. 6 illustrates an example of a segmented image including a region generated by performing super pixel.
FIG. 7 illustrates an example of the segmented image resulting from the super pixel to a specified region.
FIG. 8 illustrates an example of the segmented image including a deletion region identified therein, among regions included in the polygon of the recognition target.
FIG. 9 illustrates an example of a modified polygon image including a modified polygon resulting from modification of the initial polygon.
FIG. 10 illustrates comparison between the initial polygon and the modified polygon.
FIG. 11 is a flowchart illustrating an example of a process of a teaching data generation method.
FIG. 12 is a flowchart illustrating an example of a process of generating the initial polygon by inference through machine learning.
FIG. 13 is a flowchart illustrating an example of a process of generating the initial polygon through foreground extraction using hue data.
FIG. 14 is a flowchart illustrating an example of a process of generating the initial polygon using graph cut.
FIG. 15 is a flowchart illustrating an example of a process of performing machine learning for generating the initial polygon based on modified data for a polygon.
FIG. 16 is a flowchart illustrating a process following the flowchart in FIG. 15.

### DESCRIPTION OF EMBODIMENTS

In addition of label information to a target object using a machine learning model, the accuracy of the addition of the label information to a target object different from the target object that has been learned may be reduced. In other words, robustness in the addition of the label information may be reduced. With a teaching data generation device and a teaching data generation device according to an embodiment of the present disclosure, it is possible to improve the robustness in the addition of the label information.

### (Example of configuration of teaching data generation device 10)

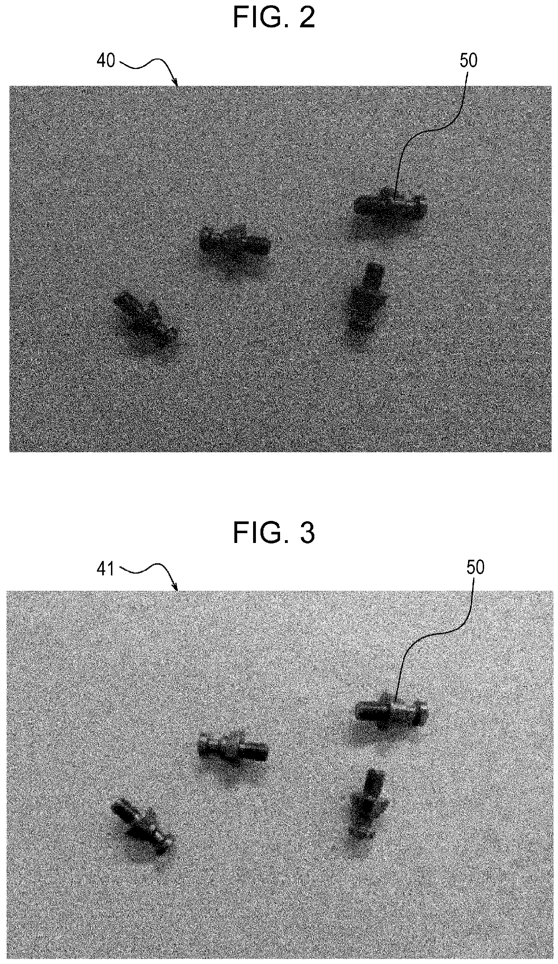

A teaching data generation device 10 according to an embodiment of the present disclosure generates teaching data for creating the machine learning model, which performs segmentation in units of pixels to image data that includes pixels and that includes an image of a recognition target 50 (refer to FIG. 2 and so on). The machine learning model performing the segmentation is also referred to as a first machine learning model. The teaching data generation device 10 generates, as the teaching data, information in which a polygon representing the outline of the recognition target 50 is associated with at least one input image 40 (refer to FIG. 2 and so on) including the image of the recognition target 50.

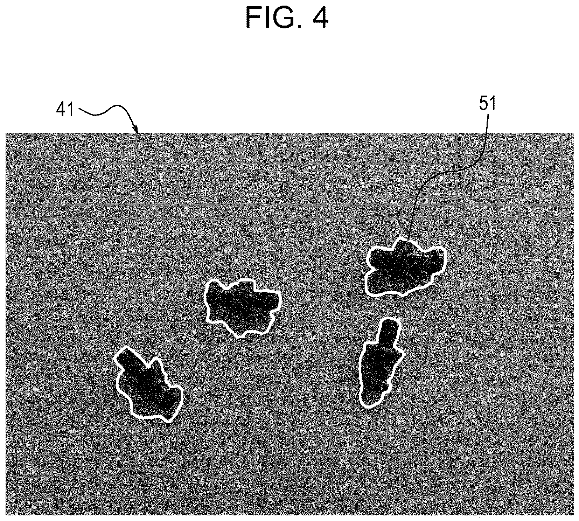

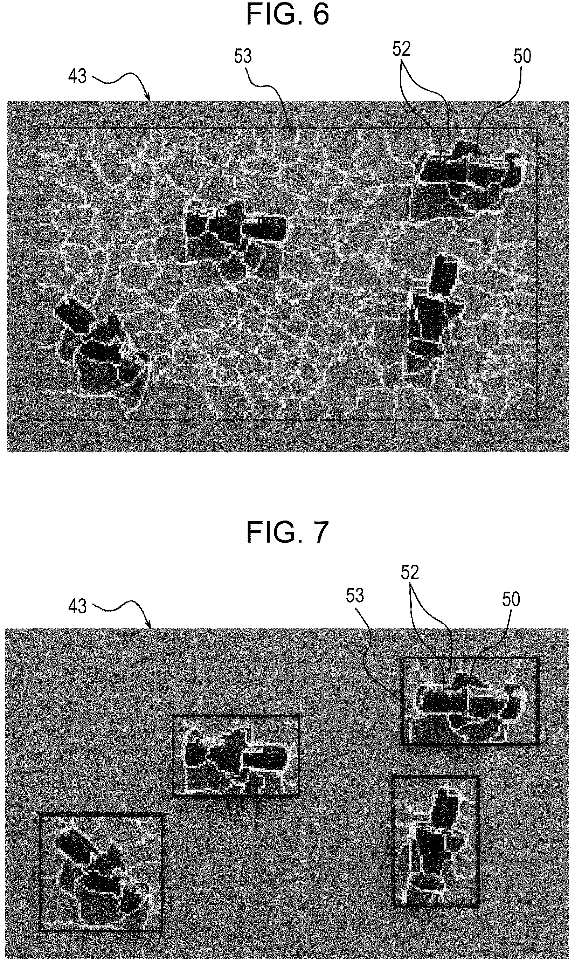

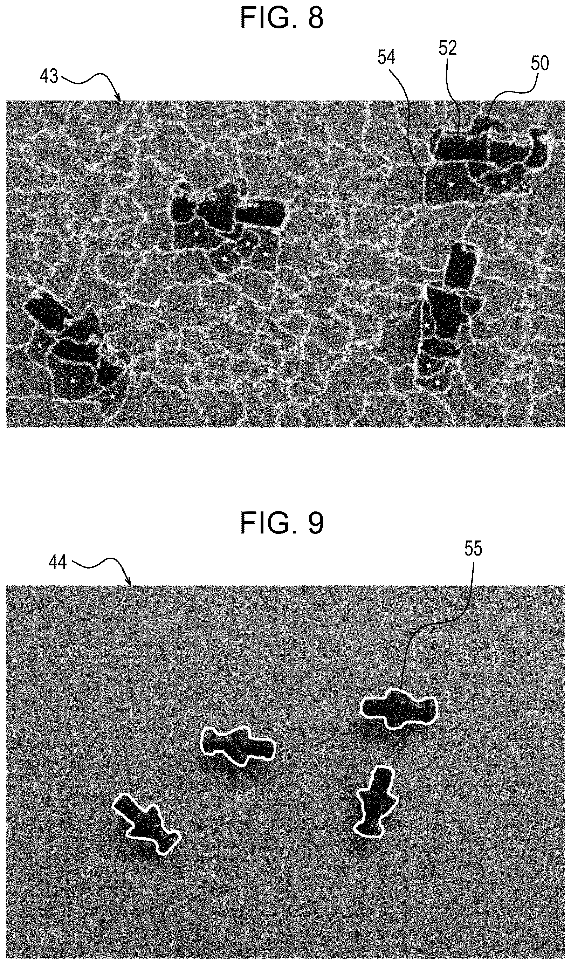

The teaching data generation device 10 may generate the teaching data, for example, by performing the following steps. The teaching data generation device 10 performs a first process to generate polygon data along the outline of a portion that is determined to be the image of the recognition target 50 in the input image 40. The teaching data generation device 10 generates an initial polygon 51 (refer to FIG. 4) as the initial value of the polygon data in the first process. The teaching data generation device 10 performs a second process to set segments 52 (refer to FIG. 6 and so on) resulting from region segmentation of the input image 40 based on a luminance gradient. The teaching data generation device 10 may perform super pixel as the second process to add segmentation information to the input image 40. In other words, the teaching data generation device 10 performs the super pixel to set the segments 52 on the input image 40. The teaching data generation device 10 modifies the polygon based on the segments 52 set in the image data to generate a modified polygon 55 (refer to FIG. 9). The modified polygon 55 is also referred to as modified polygon data. The teaching data generation device 10 generates, as the teaching data, data in which the label information for the input image 40 is added to data in which the modified polygon 55 is generated as the polygon data in the input image 40.

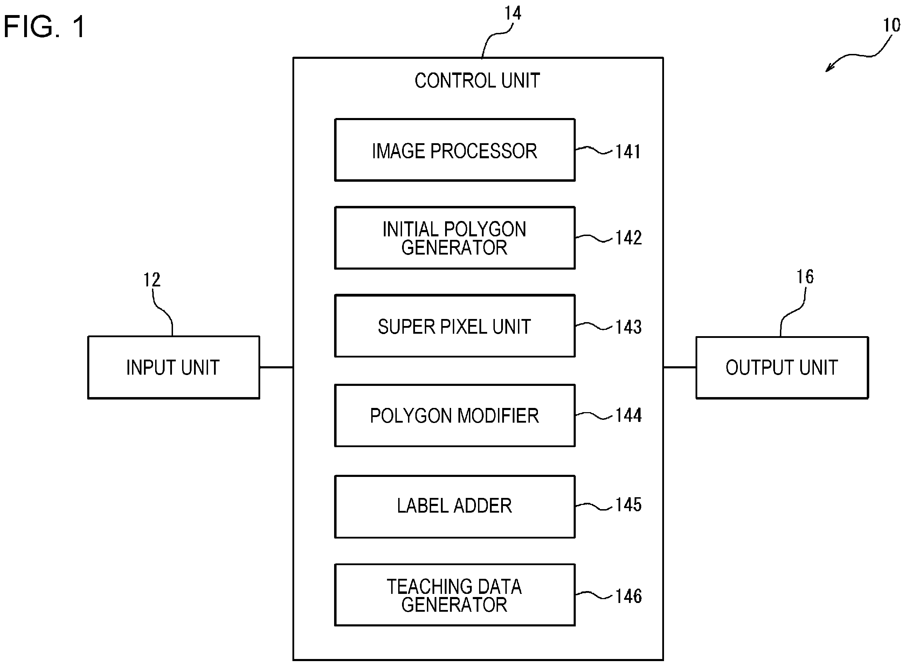

As illustrated in FIG. 1, the teaching data generation device 10 includes an input unit 12, a control unit 14, and an output unit 16. The input unit 12 accepts input of the input image 40. The control unit 14 acquires the input image 40 from the input unit 12 to generate the teaching data based on the input image 40. The output unit 16 outputs the teaching data generated in the control unit 14.

The input unit 12 includes an interface for accepting the input of the input image 40. The output unit 16 includes an interface for outputting the teaching data. The interface may include a communication device that is capable of communication in a wired manner or wireless communication. The communication device may be capable of communication in communication methods based on various communication standards. The communication device can be configured using a known communication technique.

The input unit 12 may include an input device accepting input of information, data, or the like from a user. The input device may include, for example, a touch panel or a touch sensor, or a pointing device such as a mouse. The input device may include physical keys. The input device may include an audio input device, such as a microphone.

The control unit 14 may include at least one processor to provide control and processing capabilities for performing various functions. The processor may execute programs to realize the various functions of the control unit 14. The processor may be realized as a single integrated circuit. The integrated circuit is also referred to as an IC. The processor may be realized as multiple integrated circuits and discrete circuits connected so as to be capable of communication. The processor may be realized based on other various known techniques.

The control unit 14 may include a storage unit. The storage unit may include an electromagnetic storage medium, such as a magnetic disk, and/or may include a memory, such as a semiconductor memory or a magnetic memory. The storage unit stores a variety of information. The storage unit stores the programs and so on that are executed in the control unit 14. The storage unit may be configured as a non-temporary readable medium. The storage unit may function as a working memory of the control unit 14. At least part of the storage unit may be configured separately from the control unit 14.

In the present embodiment, the control unit 14 includes an image processor 141, an initial polygon generator 142, a super pixel unit 143, a polygon modifier 144, a label adder 145, and a teaching data generator 146. The respective components in the control unit 14 are capable of performing processes necessary for generating the teaching data. The control unit 14 may include multiple processors corresponding to the respective multiple components. The respective processors are capable of sharing and performing the processes in the respective components. The control unit 14 may be capable of performing the necessary processes with one processor.

### (Example of operation of the teaching data generation device 10)

A specific example of the operation of the teaching data generation device 10 will now be described.

### <Input of image>

The input unit 12 accepts input of the input image 40 illustrated in FIG. 2 and supplies the input image 40 to the control unit 14. The input image 40 includes the image of the recognition target 50, which is used for generating the teaching data. The input unit 12 may accept input of one image or input of two or more images as the input image 40.

### <Preprocessing>

The image processor 141 in the control unit 14 performs image processing intended to reduce noise included in the input image 40 acquired from the input unit 12 and to highlight the outline of the recognition target 50. The image processor 141 may perform processing, such as contrast correction, gamma correction, bilateral filtering, or Gaussian filtering. The image processor 141 selects the processing and/or adjusts parameters in the processing so as to highlight the outline of the recognition target 50 depending on the content of the acquired input image 40 or the purpose of the image processing. The processing performed by the image processor 141 is also referred to as preprocessing. The image resulting from the preprocessing to the input image 40 is also referred to as a preprocessing image 41. The preprocessing image 41 is illustrated in FIG. 3.

### <Generation of initial polygon>

The initial polygon generator 142 in the control unit 14 generates the initial polygon 51 on the preprocessing image 41, as illustrated in FIG. 4. The initial polygon 51 is a line representing the outline of the recognition target 50. The image having the initial polygon 51 generated thereon is also referred to as a polygon generated image 42. The initial polygon generator 142 generates the initial polygon 51 on the input image 40 when the preprocessing is not performed. The process to generate the initial polygon 51 is included in the first process. The initial polygon generator 142 may perform the following processes to generate the initial polygon 51.

### <<Inference through machine learning>>

The initial polygon generator 142 may perform inference for object detection through machine learning to the input image 40 or the preprocessing image 41 that is input, using the pre-learned machine learning model, and may use outline information that is output as the initial polygon 51. The machine learning model used for the inference to generate the initial polygon 51 is also referred to as a second machine learning model. The initial polygon generator 142 may further perform graph cutting to the polygon generated image 42 using the initial polygon 51, which is acquired from the inference through the machine learning, as a cost function in consideration of the possibility that a proper outline is not output when the recognition target 50 has a complicated outline. The initial polygon generator 142 may use data resulting from the graph cutting as the initial polygon 51.

### <<Foreground extraction using hue data>>

In extraction of the outline, use of a model specialized for foreground extraction by training the multiple recognition targets 50 as one class as a pre-learned model is known as being effective. Accordingly, the initial polygon generator 142 may specify a region on the input image 40 or the preprocessing image 41, may extract background color data in the specified region, and may use the outline of the foreground acquired by using a hue value of the background color data as the initial polygon 51. The method of extracting the foreground in the above manner is a common method used in chroma keying and so on. When the background of the image has a simple structure, the outline can be quickly extracted even if multiple foreground objects exist as the recognition targets 50.

### <<Graph cut>>

The initial polygon generator 142 may perform the graph cutting to the cost function created by the user to use the data resulting from the graph cutting as the initial polygon 51.

### «Selection of process»

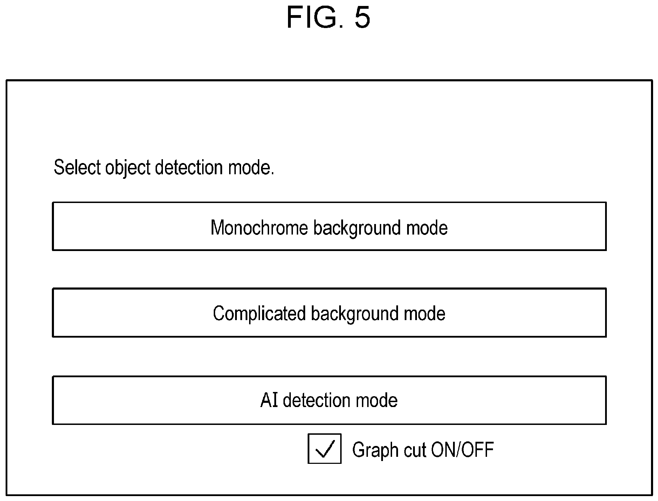

The teaching data generation device 10 may accept the input by the user, which specifies which process the initial polygon generator 142 is to perform, with the input unit 12. The input unit 12 may include a user interface. For example, the input unit 12 may present a selection screen illustrated in FIG. 5 to the user and may accept the input to select a process from the user. Each mode illustrated in FIG. 5 may be associated with the information specifying which process is to be performed or may be associated with the parameter that is specified in each process described above.

The initial polygon generator 142 may generate the initial polygon 51 using any of the foreground extraction using hue data, the graph cut, and the inference through the machine learning, or a method in which the above processes are combined. The foreground extraction using the hue data may be referred to as background removal based on hue information. The inference through the machine learning may be referred to as inference of detection of the recognition target 50 using the second machine learning model. The initial polygon generator 142 may generate the polygon data, in the first process, based on a certain algorithm including at least one selected from the group consisting of the background removal based on the hue information, the graph cut, and the inference of detection of the recognition target 50 using the second machine learning model.

The initial polygon generator 142 may specify at least part of the region of the input image 40 to generate the initial polygon 51 in the specified region. The region specified as the target in which the initial polygon 51 is to be generated is also referred to as a first region.

### <Super pixel>

The super pixel is known as an image processing method to extract portions having high luminance gradients on the input image 40 to divide the image into multiple regions along the outlines. The super pixel unit 143 in the control unit 14 performs the super pixel to a specified region 53 including at least part of the input image 40 to divide the specified region 53 into the segments 52, as illustrated in FIG. 6 and FIG. 7. The super pixel unit 143 associates the segmentation information identifying the boundaries of the generated segments 52 with the image. The image with which the segmentation information is associated is also referred to as a segmented image 43. The execution of the super pixel is included in the second process.

The super pixel unit 143 may appropriately set the specified region 53 (refer to FIG. 6) for which the super pixel is to be performed. The specified region 53 is also referred to as a second region. The super pixel unit 143 may specify the specified region 53 so as to include all the initial polygons 51 based on the data about the initial polygons 51. For example, refer to FIG. 6, the super pixel unit 143 generates the segments 52 in the specified region 53, which is a range including the four recognition targets 50. The super pixel unit 143 may set the specified regions 53 so as to individually include the respective initial polygons 51 when the multiple initial polygons 51 are generated. For example, refer to FIG. 7, the super pixel unit 143 generates the segments 52 in the specified region 53, which is a range including each recognition target 50. The super pixel unit 143 may set the specified region 53 based on the specification by the user, which has been accepted from the user as the input specifying the range. When the super pixel unit 143 automatically sets the specified region 53, how large the specified region 53 is with respect to the initial polygon 51 may be set. The super pixel unit 143 is capable of speeding up the super pixel processing or reducing the load of the super pixel processing not by specifying the entire image but by limiting the processing range.

### <Modification of polygon>

The polygon modifier 144 in the control unit 14 performs addition of the segments 52 to the initial polygon 51, deletion of part of the segments 52 from the initial polygon 51, and so on based on the initial polygon 51. The polygon modifier 144 modifies the initial polygon 51 based on an operation by the user or deletes the data about the initial polygon 51 to which no label is added in a portion where the initial polygon 51 does not accurately trace the outline of the recognition target 50. For example, when the initial polygon 51 also includes shades of the recognition target 50 as the outline of the recognition target 50, as illustrated in FIG. 8, the polygon modifier 144 specifies the segments 52 to which asterisks are added as a deletion target region 54 and deletes the deletion target region 54 from the initial polygon 51. The polygon modifier 144 is capable of generating the modified polygon 55, which accurately traces the outline of the recognition target 50, as illustrated in FIG. 9, by deleting the deletion target region 54 from the initial polygon 51. The image with which the information about the modified polygon 55 is associated is also referred to as a polygon modified image 44. When the initial polygon 51 does not completely include the outline of the recognition target 50, that is, when the segments 52 to which the asterisks are added form the outline of the object, which is the recognition target 50, the polygon modifier 144 may add the segments 52 to which the asterisks are added as the initial polygon 51 to generate the modified polygon 55.

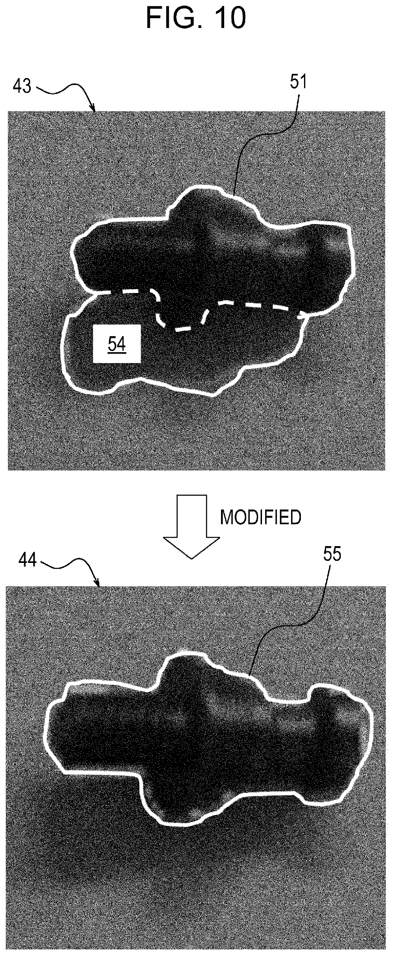

Comparison between the initial polygon 51 and the modified polygon 55 is described with reference to FIG. 10. The polygon modifier 144 is capable of generating the modified polygon 55 representing the outline close to the proper outline of the recognition target 50 by deleting the deletion target region 54 from the range surrounded by the initial polygon 51.

The polygon modifier 144 may modify the initial polygon 51 based on the segmentation information generated in the super pixel unit 143, in addition to the modification of the initial polygon 51 based on the specification of an arbitrary pixel or region by the user. For example, when an arbitrary pixel value is specified by the user, the polygon modifier 144 is capable of generating the modified polygon 55 by modifying the segment 52 including the specified pixel value as the foreground or the background. When the initial polygon 51 is modified based on the segmentation information, it is possible to reduce the user operation necessary for modifying the initial polygon 51, compared with a case in which the user traces the proper outline of the recognition target 50 for the modification. In addition, the modification of the initial polygon 51 may be speeded up. For example, referring to FIG. 10, the modification of the portion corresponding to the shades of the recognition target 50 can be realized with a small amount of operation by specifying the deletion target region 54 in the range surrounded by the initial polygon 51 as the background.

The polygon modifier 144 may automatically modify the initial polygon 51.

The label adder 145 in the control unit 14 adds the label information describing the recognition target 50 the outline of which is represented with the initial polygon 51 or the modified polygon 55 to the input image 40 or the preprocessing image 41. When the initial polygon 51 or the modified polygon 55 is generated on the input image 40 or the preprocessing image 41, the label adder 145 adds the label information to the initial polygon 51 or the modified polygon 55. The label adder 145 may accept the input of the label information from the user to add the label information specified by the user. The label adder 145 may add the label information determined by the inference through the machine learning. The label adder 145 may add the label information at an arbitrary timing during a period from the acquisition of the input image 40 from the input unit 12 to the generation of the modified polygon 55 in the polygon modifier 144.

The teaching data generator 146 in the control unit 14 generates the data in which the input image 40, the data about the modified polygon 55, and the label information are associated with each other as the teaching data and supplies the generated teaching data to the output unit 16.

When the control unit 14 acquires the multiple input images 40 from the input unit 12, the control unit 14 performs the above processes for each input image 40 to generate the teaching data.

The output unit 16 supplies the teaching data acquired from the control unit 14 to an external device.

As described above, the teaching data generation device 10 according to the present embodiment is capable of generating the teaching data by generating the initial polygon 51 and modifying the generated initial polygon 51.

### (Exemplary steps of teaching data generation method)

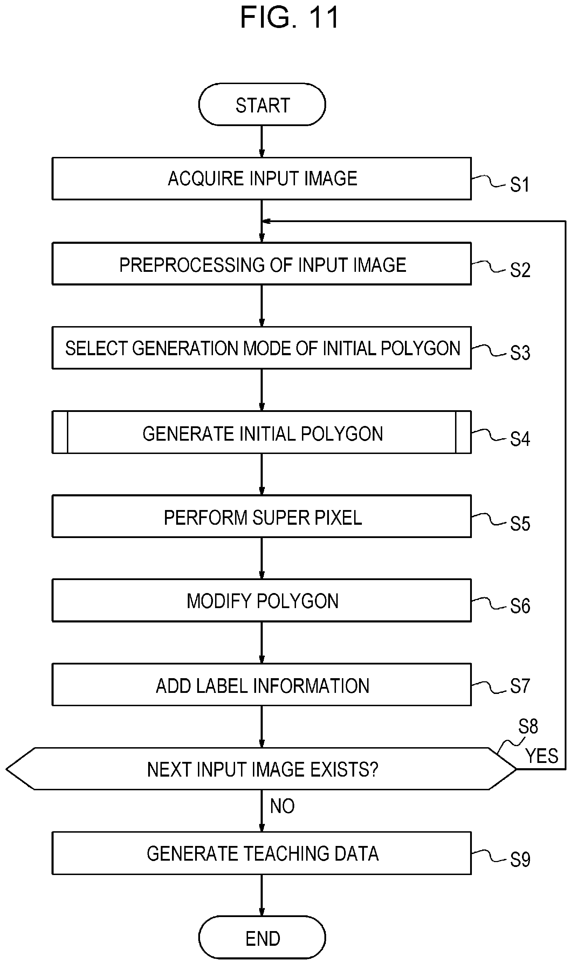

The control unit 14 in the teaching data generation device 10 may perform a teaching data generation method including steps in a flowchart illustrated in FIG. 11. The teaching data generation method may be realized as a teaching data generation program executed by the processor composing the control unit 14 in the teaching data generation device 10. The teaching data generation program may be stored in a non-temporary computer-readable medium.

The control unit 14 in the teaching data generation device 10 acquires the input image 40 via the input unit 12 (Step S 1). The control unit 14 performs the preprocessing to the input image 40 (Step S2). The control unit 14 selects the generation mode of the initial polygon 51 (Step S3). The control unit 14 selects any mode of the inference through the machine learning, the foreground extraction using the hue data, and the graph cut.

The control unit 14 generates the initial polygon 51 (Step S4). The control unit 14 generates the initial polygon 51 in the mode selected in Step S3.

### <Inference through machine learning>

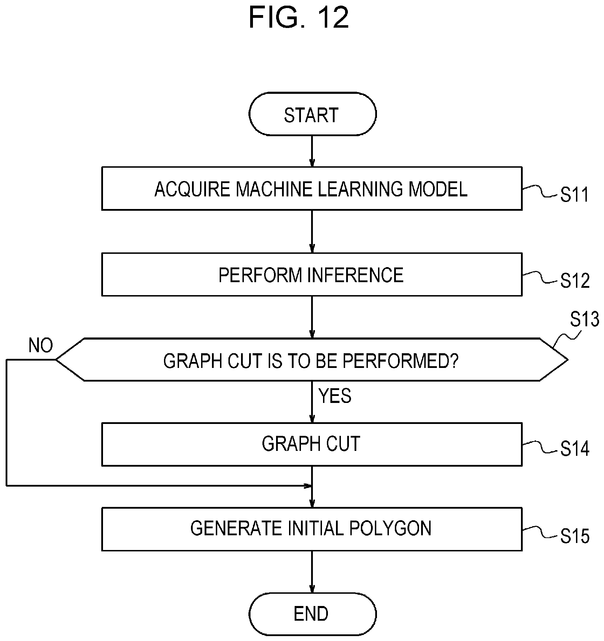

The control unit 14 performs steps in a flowchart illustrated in FIG. 12 to generate the initial polygon 51 in the mode of the inference through the machine learning.

The control unit 14 acquires the machine learning model (Step S11). The control unit 14 performs the inference to detect the outline of the recognition target 50 from the input image 40 using the machine learning model (Step S12).

The control unit 14 determines whether the graph cut is to be performed (Step S13). If the control unit 14 does not determine that the graph cut is to be performed (NO in Step S13), the control unit 14 goes Step S15. If the control unit 14 determines that the graph cut is to be performed (YES in Step S13), the control unit 14 performs the graph cut to the input image 40 using the outline detected in the inference as the cost function (Step S14).

The control unit 14 generates the initial polygon 51 based on the outline of the recognition target 50, which is detected in the inference (Step S15). After Step S15, the control unit 14 terminates the flowchart in FIG. 12 and goes to Step S5 in FIG. 11.

### <Foreground extraction using hue data>

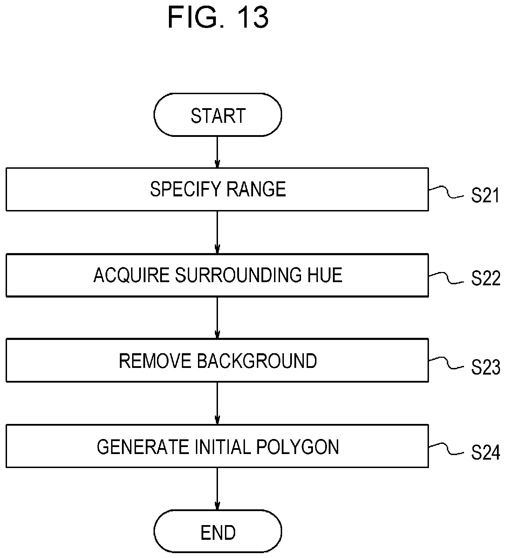

The control unit 14 performs steps in a flowchart illustrated in FIG. 13 to generate the initial polygon 51 in the mode of the foreground extraction using the hue data.

The control unit 14 specifies the range from which the foreground is to be extracted (Step S21). The control unit 14 acquires the background color in the specified range as a surrounding hue (Step S22). The control unit 14 removes the background (Step S23). The control unit 14 generates the initial polygon 51 based on the outline of the foreground extracted by removing the background (Step S24). After Step S24, the control unit 14 terminates the flowchart in Fig. 13 and goes to Step S5 in FIG. 11.

### <Graph cut>

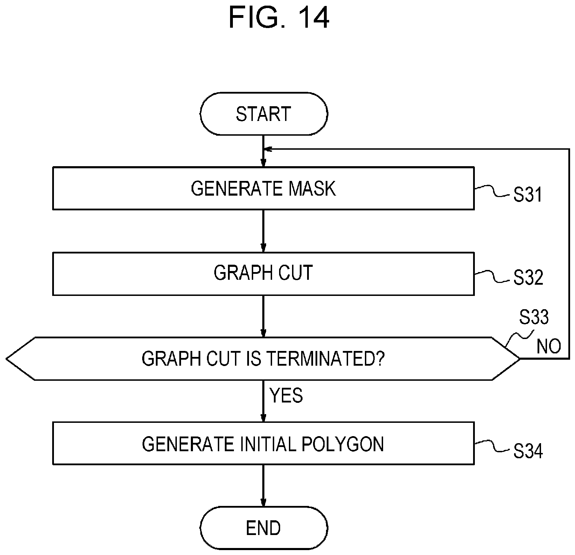

The control unit 14 performs steps in a flowchart illustrated in FIG. 14 to generate the initial polygon 51 in the mode of the graph cut.

The control unit 14 generates a mask (Step S31). The control unit 14 performs the graph cut based on the mask (Step S32). The control unit 14 determines whether the graph cut is terminated (Step S33). If the graph cut is not terminated (NO in Step S33), the control unit 14 goes back to Step S31. If the graph cut is terminated (YES in Step S33), the control unit 14 generates the initial polygon 51 based on the result of extraction of the recognition target 50 using the graph cut (Step S34). After Step S34, the control unit 14 terminates the flowchart in Fig. 14 and goes to Step S5 in FIG. 11.

The control unit 14 performs the super pixel (Step S5). The control unit 14 modifies the polygon based on the segmentation information identifying the segments 52 generated using the super pixel (Step S6). The control unit 14 adds the label information (Step S7). The control unit 14 determines whether another input image 40 for which the teaching data is to be generated exists, that is, whether the next image data exists (Step S8). If the next input image 40 exists (YES in Step S8), the control unit 14 goes back to Step S2 and processes the next input image 40. If the next input image 40 does not exist (NO in Step S8), the control unit 14 associates the data about the polygon generated on the input image 40 and the label information added to the polygon with the input image 40 to generate the teaching data (Step S9). After Step S9, the control unit 14 terminates the steps in the flowchart in FIG. 11.

The control unit 14 may perform the step of adding the label information in Step S7 at any timing between Step S1 and Step S7. When the label information is added before the generation of the initial polygon 51, the control unit 14 adds the label information to the input image 40. When the initial polygon 51 is generated on the input image 40 to which the label information is added, the control unit 14 adds the label information added to the input image 40 to the generated initial polygon 51. The control unit 14 may extract the recognition target 50 matched with the label information added to the input image 40 to generate the initial polygon 51 for the extracted recognition target 50.

The control unit 14 may perform the step of generating the initial polygon 51 in Step S4 in Fig. 11 after the step of performing the super pixel in Step S5. In this case, the control unit 14 is capable of generating the initial polygon 51 based on the segmentation information.

In the modification of the polygon, the control unit 14 may perform the super pixel again for the entire image. For example, when the control unit 14 has performed the super pixel only for a partial range of the input image 40 in Step S5, the segmentation information is not associated outside the range of the super pixel. Accordingly, performing the super pixel again for the entire image in the modification of the polygon by the control unit 14 can be supposed in various aspects.

### (Brief summary)

As described above, with the teaching data generation device 10 and the teaching data generation method according to the present embodiment, the time to draw the polygon representing the outline of the recognition target 50 is reduced by generating the initial polygon 51 and modifying the generated initial polygon 51. In addition, the user operation to recognize the recognition target 50 as the foreground and generate the initial polygon 51 is reduced.

The initial polygon 51 is modified based on the segmentation information identifying the segments 52, which are set by performing the super pixel to the input image 40 or the preprocessing image 41 that is input. This enables the initial polygon 51 to be modified with a high accuracy so that the outline represented by the modified polygon 55 comes close to the proper outline of the recognition target 50. In addition, the time to modify the initial polygon 51 is reduced.

The processing load of the super pixel is reduced by performing the super pixel for a limited range around the initial polygon 51 or the recognition target 50. As a result, the calculation cost can be decreased.

As a comparative example, a configuration is considered in which the polygon data representing the outline of the object, which is the recognition target 50, is generated through a manual operation by the user. In this case, the amount of operation and the operation time to specify the outline by the user are increased as the outline of the object becomes more complicated. With the teaching data generation device 10 and the teaching data generation method according to the present embodiment, the polygon can be generated with a high accuracy without the operation by the user by generating the initial polygon 51 and modifying the generated initial polygon 51. As a result, the amount of operation and the operation time by the user can be reduced.

As a comparative example, a configuration is considered in which the teaching data is generated by performing annotation in which a background difference and deep learning are combined with continuous images. However, this configuration is effective if the target object is continuous images that are moving but is not usable in a case in which the target object includes different multiple images or a case in which any background image with no object does not exist. With the teaching data generation device 10 and the teaching data generation method according to the present embodiment, the polygon can be generated with a high accuracy. As a result, the robustness for the target objects that are not the same can be improved.

As a comparative example, a configuration is considered in which the teaching data is generated by detecting the outline of the foreground from an arbitrary background with a high accuracy. However, in this configuration, the operation to input the shape of the foreground region is increased when the images of multiple objects are included in one image. With the teaching data generation device 10 and the teaching data generation method according to the present embodiment, the input of the shape of the foreground region can be omitted by generating the initial polygon 51. As a result, the amount of operation and the operation time by the user can be reduced.

As a comparative example, a configuration is considered in which the label is added to the segmentation of each pixel in the image using the machine learning model. However, in this configuration, it is necessary to generate the teaching data with a high accuracy in order to increase the accuracy of the addition of the label. In order to generate the highly accurate teaching data, the operation time and the operation cost for preparing the initial teaching data and the calculation load and the calculation cost for performing the training to generate the machine learning model occur. With the teaching data generation device 10 and the teaching data generation method according to the present embodiment, the polygon can be generated with a high accuracy even with no operation by the user by generating the initial polygon 51 and modifying the generated initial polygon 51. As a result, the amount of operation and the operation time by the user can be reduced.

### (Other embodiments)

Other embodiments will now be described.

### <Feedback of modified data for initial polygon 51>

The teaching data generation device 10 may sequentially generate the teaching data for the respective multiple input images 40. In this case, the teaching data generation device 10 may give feedback of modified data about the initial polygon 51 on the input image 40 that is processed in an earlier order to the generation of the initial polygon 51 on the input image 40 that is processed in a later order. This increases the accuracy of the initial polygon 51. As a result, the operation load or the calculation load for the modification of the initial polygon 51 can be reduced.

For example, it is assumed that the initial polygon 51 generated on the input image 40 includes the shade of the object, which is the recognition target 50. In this case, the teaching data generation device 10 generates the modified polygon 55 by deleting the shade portion form the initial polygon 51 in the polygon modifier 144 in the control unit 14. The control unit 14 features the image of the deleted shade portion as the modified data and gives feedback of the data resulting from the featuring of the modified data to the generation of the initial polygon 51 on the input image 40 that is processed in a later order. The control unit 14 is capable of detecting the shade portion from the input image 40 based on the data resulting from the featuring of the image of the shade portion as the modified data to remove the shade portion from the beginning in the generation of the initial polygon 51.

The data resulting from the featuring of the modified data including the image of the modified portion, such as the shade portion, includes, for example, pixel value information, texture information, or shape information about the image. The data resulting from the featuring of the modified data for the initial polygon 51 is also referred to as featured data. The featured data can also be used as a condition to select the kind of the image processing or determine the parameter of the image processing in the image processor 141 in the control unit 14. In other words, the image processor 141 may modify the parameter to be applied to the preprocessing of the input image 40 that is to be processed later based on the modified data for the polygon data. The parameter to be applied to the preprocessing is also referred to as a preprocessing parameter value.

In the generation of the teaching data, the control unit 14 may process the multiple input images 40 including the images of the objects of the same kind. When the control unit 14 processes the multiple input images 40 including the images of the objects of the same kind to generate the initial polygon 51 through the inference using the machine learning model, the machine learning model that is over-fitted for the input images 40 may be used as the machine learning model used in the inference. For example, when a certain condition is met at start of the processing of the next input image 40, the control unit 14 may generate the machine learning model used for the generation of the initial polygon 51 through the training using the teaching data that is generated based on the processed input image 40 for transition.

The control unit 14 may correct the input image 40 as the preprocessing of the input image 40 to be processed next based on the difference between the initial polygon 51 (the polygon data) and the modified polygon 55 (the modified polygon data) in the processing of the input image 40, which has been performed. In addition, the control unit 14 may correct the input image 40 as the preprocessing of the input image 40 to be processed next based on the modified data from the initial polygon 51 (the polygon data) to the modified polygon 55 (the modified polygon data) in the processing of the input image 40, which has been performed.

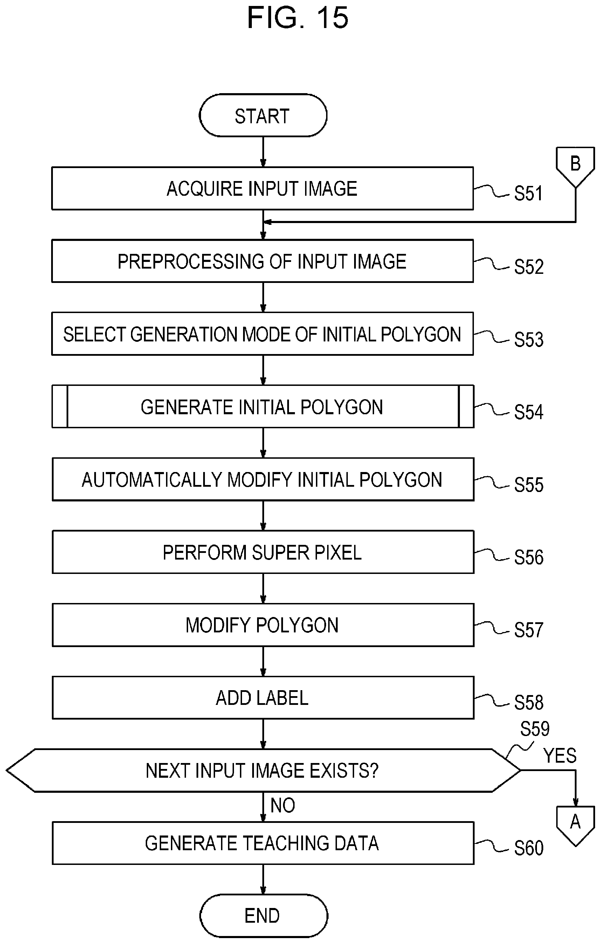

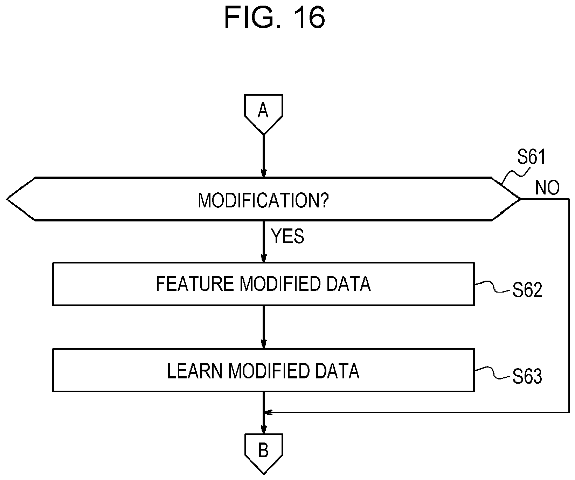

The control unit 14 may give feedback of the modified data for the initial polygon 51 in the above manner by performing the teaching data generation method including steps in flowcharts illustrated in Fig. 15 and FIG. 16.

The control unit 14 acquires the input image 40 via the input unit 12 (Step S51). The control unit 14 performs the preprocessing to the input image 40 (Step S52). The control unit 14 selects the generation mode of the initial polygon 51 (Step S53). The control unit 14 generates the initial polygon 51 (Step S54). The control unit 14 generates the initial polygon 51 in the mode selected in Step S53. The control unit 14 may perform the steps illustrated in any of FIG. 12, FIG. 13, or FIG. 14 in Step S54. The respective steps from Step S51 to Step S54 in FIG. 15 correspond to the respective steps from Step S1 to Step S4 in FIG. 11.

The control unit 14 automatically modifies the initial polygon 51 (Step S55). Specifically, the control unit 14 may modify the initial polygon 51 based on the modified data for the initial polygon 51 when the input image 40 has been processed before the input image 40 that is currently being processed. The control unit 14 may not perform Step S55.

The control unit 14 performs the super pixel (Step S56). The control unit 14 modifies the polygon based on the segmentation information identifying the segments 52 generated using the super pixel (Step S57). The control unit 14 adds the label information (Step S58). The control unit 14 determines whether another input image 40 for which the teaching data is to be generated exists, that is, whether the next image data exists (Step S59). If the next input image 40 does not exist (NO in Step S59), the control unit 14 associates the data about the polygon generated on the input image 40 and the label information added to the polygon with the input image 40 to generate the teaching data (Step S60). After Step S60, the control unit 14 terminates the steps in the flowchart in FIG. 11. The respective steps from Step S56 to Step S60 in FIG. 15 correspond to the respective steps from Step S5 to Step S9 in FIG. 11.

If the next input image 40 exists (YES in Step S59), the control unit 14 determines whether the modification of the polygon is performed in the processing of the previous input image 40 (Step S61). If the modification of the polygon is not performed in the processing of the previous input image 40 (NO in Step S61), the control unit 14 goes back to Step S52 to process the next input image 40. If the modification of the polygon is performed in the processing of the previous input image 40 (YES in Step S61), the control unit 14 features the modified data (Step S62). The control unit 14 learns the modified data (Step S63). The control unit 14 may generate the machine learning model used for generating the initial polygon 51 through the training of the modified data. After Step S63, the control unit 14 goes back to Step S52 to process the next input image 40.

As described above, the teaching data generation device 10 is capable of improving the accuracy of the initial polygon 51 by giving feedback of the featured data. In addition, the teaching data generation device 10 is capable of further improving the accuracy of the initial polygon 51 by automatically modifying the initial polygon 51 based on the featured data. Furthermore, the teaching data generation device 10 is capable of highlighting the outline of the recognition target 50 to easily detect the initial polygon 51 by adjusting the parameters in the preprocessing of the input image 40 based on the featured data. As a result, the accuracy of the initial polygon 51 is further improved.

Although the embodiments of the teaching data generation device 10 are described above, an aspect of a storage medium having programs recorded thereon (for example, an optical disk, a magneto-optical disk, a compact disc-read only memory (CD-ROM), a compact disc recordable (CD-R), a compact disc rewritable (CD-RW), a magnetic tape, a hard disk, or a memory card) may be given as the embodiment of the present disclosure, in addition to the method or the programs for embodying the device.

The embodiments of the programs are not limited to application programs, such as object code compiled by a compiler or program code executed by an interpreter, and may be an embodiment of a program module or the like incorporated in an operating system. In addition, all the steps of the programs may be performed or may not be performed only in a central processing unit (CPU) on a control board. Part or all of the programs may be executed by another processing unit installed on an extended board or an extended unit added to the board, if necessary.

Although the embodiments according to the present disclosure are described above based on the drawings and the examples, various variations and changes based on the present disclosure are available by the person skilled in the art. Accordingly, it is noted that the variations and changes are included in the scope of the present disclosure. For example, functions and the likes included in the respective components and so on are capable of being rearranged so as not to cause logical inconsistency. The multiple components and so on may be combined into one or may be divided.

All the constituent features described in the present disclosure and/or all the methods or all the steps in the processes, which are disclosed, may be arbitrarily combined unless these features are exclusive combinations. In addition, the respective features described in the present disclosure may be replaced with alternate features functioning for the same objective, an equivalent objective, or a similar objective unless explicitly denied. Accordingly, the respective disclosed features are only examples of a series of comprehensive same or equivalent features unless explicitly denied.

The embodiments according to the present disclosure are also not limited to the specific configuration of any of the above embodiments. The embodiments according to the present disclosure may be expanded to all the new features described in the present disclosure or combinations of the features, or all the new methods or all the new steps of the processes described in the present disclosure or combinations of the methods or the steps of the processes.

In the present disclosure, description of "first", "second", or the like is an identifier for discriminating the corresponding component. The components discriminated with the description of "first", "second", and the like in the present disclosure may be replaced with the numbers of the components. For example, the "first", which is the identifier of the first process, may be replaced with the "second", which is the identifier of the second process. The replacement of the identifiers is concurrently performed. The corresponding components are discriminated after the replacement of the identifiers. The identifiers may be deleted. The components from which the identifiers are deleted are discriminated with signs. The order of the components is not interpreted based on only the description of the identifiers, such as the "first" and the "second", in the present disclosure and the description of the identifiers, such as the "first" and the "second", in the present disclosure is not used as the basis of the existence of the identifiers of smaller numbers.

The configuration according to the present disclosure may be realized as an image processing device including the input unit 12 that acquires at least one input image 40 including an image of the recognition target 50 and the control unit 14 that performs the first process to generate the polygon data along the outline of the portion determined to be the image of the recognition target 50 in the first region of the input image 40, the second process to set the segments 52 resulting from the region segmentation of the input image 40 based on the luminance gradient, and the generation of the modified polygon data resulting from the modification of the polygon data based the segments 52 set in the second process.

### REFERENCE SIGNS

10 teaching data generation device (12: input unit, 14: control unit, 16: output unit, 141: image processor, 142: initial polygon generator, 143: super pixel unit, 144: polygon modifier, 145: label adder, 146: teaching data generator)
40 input image
41 preprocessing image
42 polygon generated image
43 segmented image
44 polygon modified image
50 recognition target
51 initial polygon
52 segment
53 specified region
54 deletion region
55 modified polygon

## Claims

1. A teaching data generation device comprising:
an input unit that acquires at least one input image including an image of a recognition target;
a control unit that performs a first process to generate polygon data along an outline of a portion determined to be the image of the recognition target in a first region of the input image, a second process to set segments resulting from region segmentation of the input image based on a luminance gradient, generation of modified polygon data resulting from modification of the polygon data based the segments set in the second process, and addition of label information to the input image to generate teaching data; and
an output unit that outputs the teaching data.

2. The teaching data generation device according to claim 1,
wherein the generation of the polygon data is performed based on recognition of foreground and background included in the input image in the first process, and
wherein super pixel to divide the input image into the segments is performed in the second process.

3. The teaching data generation device according to claim 1 or 2,
wherein the control unit performs the second process in a second region of the input image, which includes a portion corresponding to the generated polygon data, and performs the addition of the label information to a portion of the input image, which corresponds to the modified polygon data generated through the modification based on the segments set in the second process.

4. The teaching data generation device according to claim 3,
wherein the control unit performs the second process for a portion where the polygon data is generated in the input image.

5. The teaching data generation device according to claim 3 or 4,
wherein the control unit sets the second region so as to be smaller than the first region.

6. The teaching data generation device according to claim 1 or 2,
wherein the control unit sets the segments by performing the second process for a region including the recognition target in the input image to generate the polygon data in the region in the input image where the second process has been performed.

7. The teaching data generation device according to any of claims 1 to 6,
wherein the label information is added to the input image to generate the polygon data matched with the label information.

8. The teaching data generation device according to any of claims 1 to 7,
wherein the control unit generates the polygon data in the first process based on a certain algorithm including at least one selected from the group consisting of background removal based on hue information, graph cut, and inference of detection of the recognition target using a second machine learning model.

9. The teaching data generation device according to claim 8,
wherein the control unit performs the graph cut using the outline of the recognition target acquired through the inference of detection of the recognition target as a cost function as the certain algorithm.

10. The teaching data generation device according to claim 8 or 9,
wherein the control unit performs learning of the second machine learning model based on a result of the modification of the polygon data based on the segments set in the second process.

11. The teaching data generation device according to any of claims 1 to 10,
wherein the control unit corrects the input image that is input based on a difference between the polygon data and the modified polygon data or modified data to the modified polygon data.

12. The teaching data generation device according to any of claims 1 to 11,
wherein the control unit modifies a preprocessing parameter value applied to preprocessing to the input image that is to be processed later based on modified data to the polygon data.

13. A teaching data generation method comprising:
acquiring at least one input image including an image of a recognition target;
performing a first process to generate polygon data along an outline of a portion determined to be the image of the recognition target in a first region of the input image;
performing a second process to set segments resulting from region segmentation of the input image based on a luminance gradient;
generating modified polygon data resulting from modification of the polygon data based the segments set in the second process;
adding label information to the input image; and
generating teaching data to output the generated teaching data.

14. An image processing device comprising:
an input unit that acquires at least one input image including an image of a recognition target; and
a control unit that performs a first process to generate polygon data along an outline of a portion determined to be the image of the recognition target in a first region of the input image, a second process to set segments resulting from region segmentation of the input image based on a luminance gradient, and generation of modified polygon data resulting from modification of the polygon data based the segments set in the second process.
